(19)

**Europäisches Patentamt**
**European Patent Office**
**Office européen des brevets**

(11) **EP 4 668 665 A1**

(12) **EUROPEAN PATENT APPLICATION**

(43) Date of publication:
**24.12.2025 Bulletin 2025/52**

(21) Application number: **24305976.3**

(22) Date of filing: **20.06.2024**

(51) International Patent Classification (IPC):
**H04L 9/00** (2022.01)     **H04L 9/30** (2006.01)

(52) Cooperative Patent Classification (CPC):
**H04L 9/3093; H04L 9/004**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **AZEVEDO OLIVEIRA, Paco**
**92700 COLOMBES (FR)**

• **CALLE VIERA, Andersson**
**13100 AIX EN PROVENCE (FR)**
• **COGLIATI, Benoît-Michel**
**57100 THIONVILLE (FR)**
• **VIGILANT, David**
**92240 MALAKOFF (FR)**

(74) Representative: **Bricks, Amélie**
**Thales Dis France SAS**
**Intellectual Property Department**
**6, rue de la Verrerie**
**92190 Meudon (FR)**

(54) **METHOD FOR PROTECTING AGAINST FAULT ATTACKS AN EXECUTION OF A GENERATION OF A CRYSTALS-DILITHIUM SIGNATURE**

(57)     The invention relates to methods, and associated devices, for protecting the execution of the generation of a Crystals-Dilithium digital signature $\sigma$ of a message M with a secret key sk against attacks exploiting invalid signatures content by fault attacks. In order to prevent an attacker bypassing by fault injection attacks tests on a second test vector $\mathbf{r0}/\tilde{r_0}$ from obtaining invalid signatures as outputs of the signature generation algorithm, the invention modifies the norm check performed on the second test vector $\mathbf{r0}/\tilde{r_0}$ in such a way that if this check is skipped, the candidate signature is rejected by the subsequent test performed on a fourth vector of polynomials **h.**

[Fig. 5a]

S0
A ∈ $R_q^{k \times l}$ := ExpandA ($\rho$)
$\mu$ ∈ {0,1}^512 := H(tr||M)
$K$ := 0, (z,h) := ⊥
$\rho'$ ∈ {0,1}^512 := H(K||$\mu$)(or $\rho' \leftarrow$ {0,1}^512 for randomized signing)

while (z,h) = ⊥ do

S1 — Generating a masking vector y

S2 — Computing a first vector of polynomials **w = Ay**

S3 — Determining a second vector of polynomials **w₁**

S4 — Generating a challenge c

S5 — Generating a first test vector **z** and second test vector **r0**

S6 — Modifying said second test vector

S7 — Performing first rejection tests

z and **r0** fulfill conditions ? — No

Yes

S8 — Generating a fourth vector of polynomials h

S9 — Performing second rejection tests

Norm of ct0 and h fulfill conditions ? — No

Yes

S10 — Generating signature

EP 4 668 665 A1

**Description**

**FIELD OF THE INVENTION**

The present invention relates to the field of cryptographic schemes, and of associated cryptographic devices, and more particularly to improvements to Dilithium lattice-based calculation scheme.

**BACKGROUND OF THE INVENTION**

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dilithium and Kyber have been selected by the NIST to become Post-Quantum Cryptography standards for supporting respectively signature and encryption.

Dilithium signature scheme belongs to the family of lattice-based schemes based on the Learning With Error (LWE) and Fiat Shamir with aborts framework. For generating a valid signature of a message, schemes based on such a framework repeatedly generate candidate signatures, test whether they fulfill predetermined norm conditions, and reject them until a candidate signature fulfills all the conditions and is output as the signature of the message.

Researchers have discovered that information on the secret key used by Dilithium scheme for generating a signature may be obtained from invalid candidate signatures which do not fulfill at least one of the performed checks. As will be described below, such invalid candidate signatures are usually discarded but an invalid signature may be wrongly output by the signature generation algorithm as a valid signature when an attacker succeeds in bypassing one of the aforementioned tests using a fault attack.

Consequently, there is a need to improve the security of Dilithium scheme by protecting it against attacks exploiting invalid signatures content generated by a signature process which has been disturbed by fault attacks.

**SUMMARY OF THE INVENTION**

For this purpose and according to a first aspect, this invention therefore relates to a method for securing against physical attacks the execution of a generation method of a Crystals-Dilithium based digital signature $\sigma = (\bar{c}, z, \mathbf{h})$ of a message M with a secret key sk = $(\rho, K, tr, \mathbf{s_1}, \mathbf{s_2}, \mathbf{t_0})$ where $\rho$, K, tr are 256 bits binary values, $\mathbf{s_1}$ and $\mathbf{s_2}$ are vectors of length l, respectively k, of elements of a ring

$R_q = Z_q[X]/(X^n + 1)$ whose coefficients' absolute values are lower than a first predetermined value $\eta$, and $\mathbf{t_0}$ is a polynomial vector of length k with k, l, n and q integers,

said Crystals-Dilithium based digital signature generation method comprising :

a) generating a masking vector $\mathbf{y}$, of length l, of polynomials with coefficients whose absolute values are less than a second predetermined value $\gamma_1$,
b) computing a first vector of polynomials, of length k, w = Ay, where A is a k $\times$ l matrix each of whose entries is a polynomial in the ring $R_q$,
c) determining a second vector of polynomials $\mathbf{w_1}$ of length k, where every polynomial coefficient $w^i$ in Ay, with i in 0, ..., k-1, is written as $w^i = \mathbf{w_1}^i \cdot 2\gamma_2 + \mathbf{w_0}^i$ where $\left\| w_0^i \right\|_\infty \le \gamma_2$ with $\gamma_2$ a third predetermined value and $\mathbf{w_0}$ is a third vector of polynomials of length k,
d) generating a challenge c based on the message and the second vector of polynomials $\mathbf{w_1}$,
e) generating a first test vector of polynomials z as equal to $\mathbf{y} + c\mathbf{s_1}$ and generating a second test vector of polynomials **r0,**
f) performing first rejection tests comprising checking if the first test vector of polynomials **z** and the second test vector of polynomials **r0** fulfill predetermined conditions, and
g) when said conditions are not fulfilled, restarting signature generation from step a),
h) else when said conditions are fulfilled, generating a fourth vector of polynomials **h** of the Crystals-Dilithium digital signature $\sigma$ based on said second test vector of polynomial **r0** and performing second rejection tests comprising checking that the norm of a third test vector of polynomials $c\mathbf{t_0}$ fulfills a predetermined condition and that the generated fourth vector of polynomials h is such that $|\mathbf{h}|_{h=1} \le \omega$ with $\omega$ a predetermined maximum number of coefficients equal to 1 among all the coefficients of the fourth vector of polynomials h,
i) when said conditions on the third test vector $c\mathbf{t_0}$ or on the fourth vector of polynomials h are not fulfilled, restarting the signature generation from step a), else generating said signature,

the steps a), to i) being repeated until all conditions are satisfied,
said method being performed by a cryptographic device comprising a processor and a memory,
and comprising : before performing said first rejection test, modifying the second test vector of polynomials by applying to it a first transformation such that at least $\omega+1$ coefficients of the modified second test vector of polynomials are in [$\gamma_2$ , q[ with a probability greater than a predetermined threshold, and wherein checking if the second test vector of polynomials fulfills predetermined conditions when performing the first rejection tests comprises for the modified second test vector:

- generating a temporary test vector by applying to said modified second test vector an inverse transformation of the first transformation,
- performing a boundary check on each of the coefficients of the temporary test vector,
- when each of the coefficients of the temporary test vector passes said boundary check, setting said second test vector to the value of said temporary test vector.

By doing so, when the first rejection test on the second test vector is skipped, for example as a result as a fault injection attack by an attacker, the modified second test vector will not have been returned to its original value and the second rejection test on the fourth vector of polynomials **h** will fail, leading to a rejection of the candidate signature. Leakage of information about the signature secret key through invalid signatures is therefore prevented.

Said first transformation may comprise adding a random vector of polynomials such that the coefficients of the modified second test vector are in [$2^{17}$; $2^{18}$].

According to an embodiment, n=256 and q= $2^{23}$-$2^{13}$+1.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor and a memory configured for performing the steps of the method according to the first aspect.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of the key generation, signature generation and signature verification processes of Dilithium cryptographic scheme according to its official specification;

- Figure 2 is a schematic illustration of the the key generation, signature generation and signature verification processes of Dilithium cryptographic scheme according to theDilithium specification 3.1;
- Figure 3 is a schematic illustration of the reference implementation of the signature generation of Dilithium cryptographic scheme;
- Figure 4 is a schematic illustration of a cryptographic device according to an embodiment of the present invention;
- Figures 5a and 5b are schematic illustrations of the signature generation according to an embodiment of the present invention;
- Figures 6, 7 and 8 are a schematic illustration of the supporting algorithms for FIPS 204;
- Figure 9 is a schematic illustration of the supporting algorithms for Dilithium cryptographic scheme according to the Dilithium specification 3.1.

## DETAILED DESCRIPTION OF EMBODIMENTS OF THE INVENTION

The invention relates to methods, and associated devices, for protecting the execution of the generation of a Crystals-Dilithium digital signature $\sigma$ of a message M with a secret key sk against attacks exploiting invalid signatures content generated by disturbing the signature generation process using fault attacks.

The methods, and associated devices, described here below are improvements of existing Crystals-Dilithium-based signature schemes. The present invention is in particular applicable to the following schemes:

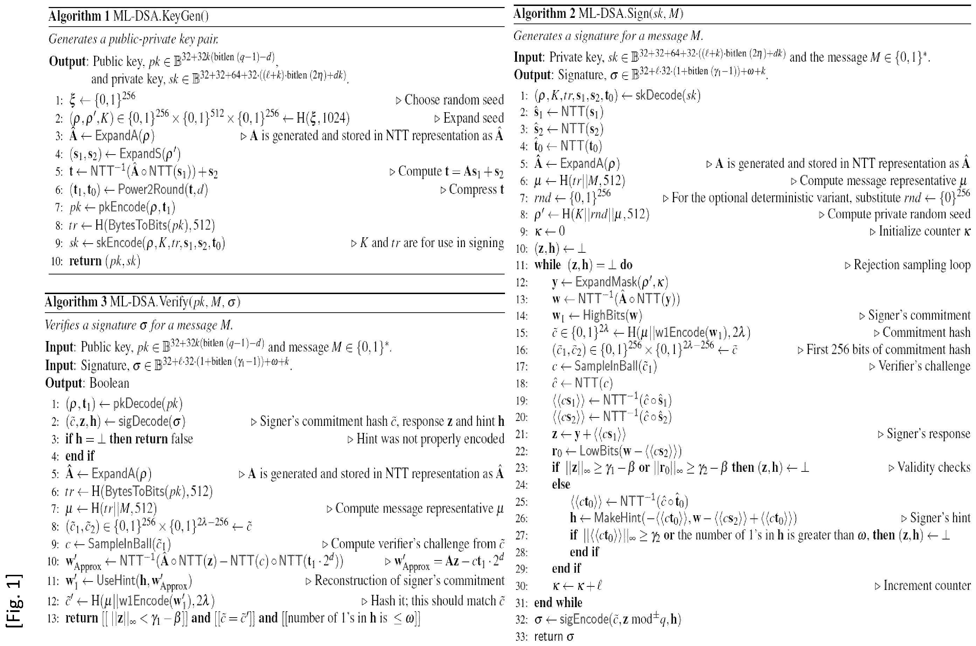

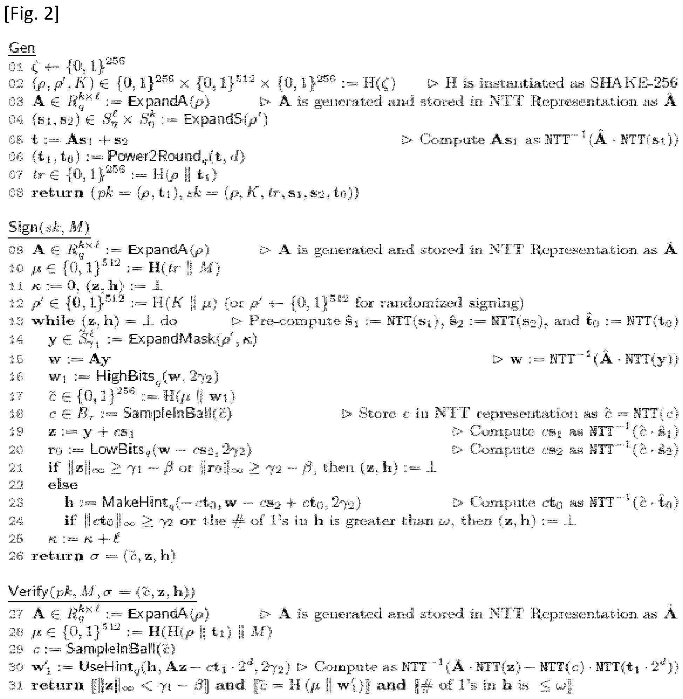

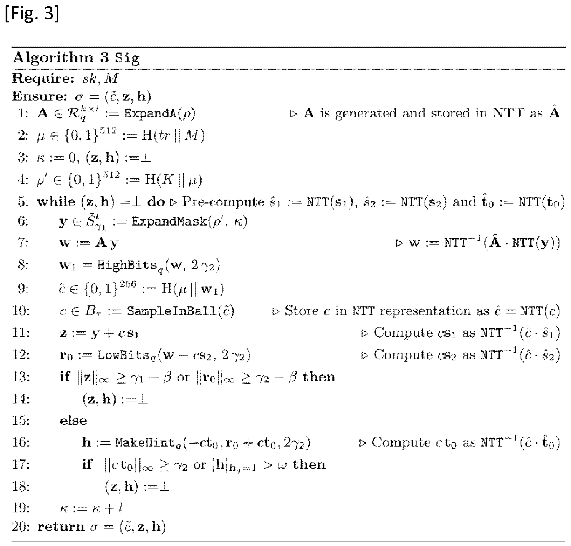

- the official specification described in "National Institute of Standards and Technology (2023) Module-Lattice-Based Digital Signature Standard. (Department of Commerce, Washington, D.C.), Federal Information Processing Standards Publication (FIPS) NIST FIPS 204 ipd", hereafter referred to as FIPS 204, whose signature algorithm is reproduced on **Figure 1,**
- "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021, hereafter referred to as Dilithium specification 3.1, whose signature algorithm is reproduced on **Figure 2,**
- the alternative signature scheme discussed in section 5.1 of "CRYSTALS-Dilithium Algorithm specifications and supporting documentation (Version 3.1)", which constitutes the reference implementation and is reproduced on **Figure 3.**

Any part of the present description describing an implementation of an operation of the algorithm which would appear as specific to only one of these variants is not meant to cover only one of theses variants; it is rather meant to cover all three variants, with an implicit adaptation for adapting it to the other variants, if needed.

In the rest of this document, as in the reference cited above:

- The secret key sk is equal to ($\rho$, K, $tr$, $s_1$, $s_2$, $t_0$) where $\rho$, K and $tr$ are 256 bits binary values and $t_0$ is a polynomial vector of length k with k an integer. Details of the generation of the secret key can be found in the reference documents cited above and are reproduced on Figure 1 for FIPS 204 and on Figure 2 for Dilithium specification 3.1 and the reference implementation.

- $s_1$ and $s_2$ are vectors of length l, respectively k, of elements of the ring $R_q = Z_q[X]/(X^n + 1)$, with k, l, n and q integers, whose coefficients' absolute values are lower than a first predetermined value $\eta$, the ensembles of such vectors are noted $S_\eta^l$ and $S_\eta^k$.

- **A** is a k $\times$ l matrix each of whose entries is a polynomial in the ring $R_q$. It is generated from the first element $\rho$ of the secret key sk by a matrix expansion using an extendable output function such as Keccak hash function. It may for example be SHAKE-128 or SHAKE-256. Alternatively, in Dilithium specification 3.1, it may be AES-128 or AES-256.

- A vector of polynomials **w,** of length k, hereafter called "first vector of polynomials", is generated from the matrix **A** and from a random masking vector **y**, of length l, of elements of the ring $R_q$ whose coefficients' absolute values are lower than a second predetermined value $\gamma_1$, with **w=Ay.**

- The first vector of polynomials **w** may be decomposed into a second vector of polynomials $\mathbf{w_1}$ and a third vector of polynomials $\mathbf{w_0}$ such that every polynomial coefficient $\mathbf{w^i}$ in **Ay,** with i in {0, ..., k-1}, is written as $\mathbf{w^i} = \mathbf{w_1}^i \cdot 2\gamma_2 + \mathbf{w_0}^i$ where $\left\| w_0^i \right\|_\infty \leq \gamma_2$ with $\gamma_2$ a third predetermined value. In FIPS204 and Dilithium specification 3.1, only the second vector of polynomials $\mathbf{w_1}$ is computed. In the reference implementation, both the third vector of polynomials $\mathbf{w_0}$ and the second vector of polynomials $\mathbf{w_1}$ are computed from the first vector of polynomials **w.**

- A challenge c is generated from the message to be signed M and from the second vector of polynomials $\mathbf{w_1}$; it may be stored under a compressed format as $\bar{c}$.

- Another vector of polynomials **z,** hereafter called the first test vector of polynomials, or equivalently the first test vector, is generated as equal to $\mathbf{y} + c\mathbf{s_1}$.

- A last vector of polynomials **h,** hereafter called "fourth vector of polynomials", is generated from the challenge c, the secret key sk and some of the other values listed above. In the FIPS 204 and Dilithium specification 3.1, the fourth vector of polynomials h is computed from the first vector of polynomials **w** whereas in the reference implementation it is computed from the third vector of polynomials $\mathbf{w_0}$.

As an example, n may be chosen as equal to 256 and q equal to $2^{23}-2^{13}+1$. Integers k and l defining the size of the matrix **A** may be chosen depending on the desired security level of the cryptographic process.

The signature $\sigma$ to be generated is noted as ($\bar{c}$, **z, h**). In FIPS 204, the value of z in the signature is modulo q.

Such a signature generation may be performed by a cryptographic device 100. Such a device may for example be a personal computer or a server. It may also be a tamper-proof device such as a Hardware Security Module HSM. It may also be a smaller device such as a smartchip.

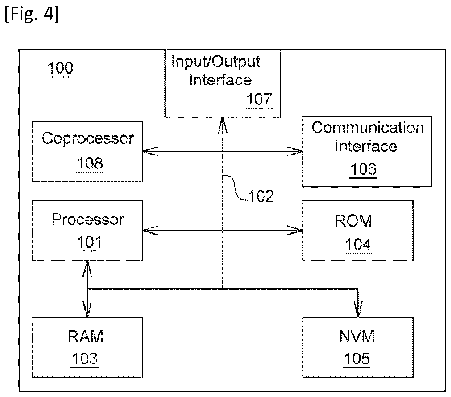

**Figure 4** is a schematic illustration of such a cryptographic device 100. It may include a processor 101 connected via a bus 102 to a random access memory (RAM) 103, a read-only memory (ROM) 104, and/or a non-volatile memory (NVM) 105. It may further include a communication interface 106 connected to the bus and which may be used to connect the device to various forms of wireless networks, e.g., wide-area networks, WiFi networks, or mobile telephony networks, or to wired networks such as an Ethernet network. It may also include an input-output interface 107 providing interfaces to an administrator, such as one or more screens, loudspeakers, a mouse, tactile surfaces, a keyboard etc... The cryptographic device may further include a coprocessor 108. This coprocessor may perform some of the operations to be performed in the frame of the execution of the signature process. For example, it may be a hardware accelerator, such as a FPGA or an ASIC. This coprocessor may be a separate chip in the cryptographic device or it may be included with the processor in a SoC. As an example, such a coprocessor may be used to compute polynomial multiplications or to perform matrix expansion.

In order to ensure the security of the generated signature, this signature generation process performs rejection sampling. Candidate signature elements are generated and subjected to rejection tests. Each time one of these tests fails, the candidate signature is rejected and new candidate signature elements are generated until all rejection tests are fulfilled.

More precisely, the algorithms of Figures 1, 2 and 3 comprise simultaneous tests on the first test vector z, which is the second element of the signature to be generated, and on another polynomial vector **r0**, on the following lines of the signature algorithm: n°23 for FIPS 204, n°21 for Dilithium specification 3.1 and n°13 of the reference implementation. In the rest of the description, the polynomial vector r0 will be called the second test vector of polynomials, or equivalently the second test vector; then, if these tests succeed, other tests are performed, on line n°27 for FIPS 204, n°24 for Dilithium specification 3.1 and n°17 of the reference implementation, simultaneously on the fourth vector of polynomials **h** and on the value $c*t_0$, hereafter called third test vector of polynomials, or equivalently the third test vector, with c the previously generated challenge and $t_0$ the last element of the secret key sk.

In order to generate the values to be tested in these tests, several values have to be generated, namely:

- the masking vector **y** of length l, needed to compute the first test vector z,
- the first vector of polynomials **w** needed in FIPS 204 and Dilithium specification 3.1, or the third vector of polynomials $\mathbf{w_0}$, needed in the reference implementation to compute the second test vector **r0** and the fourth vector of polynomials **h,**
- the challenge c, needed to compute the second test vector **r0** and the third test vector $ct_0$, and the first signature part $\tilde{c}$,
- the second test vector **r0**
- the first test vector **z.**

An attacker may skip any of these tests using a fault injection attack, such as for example a voltage or temperature glitch, a laser attack or an electromagnetic injection. Such attacks are for example described in the following references :

- Jean-Max Dutertre, Timothé Riom, Olivier Potin, and Jean-Baptiste Rigaud, "Experimental analysis of the laser-induced instruction skip fault model", The 24th Nordic Conference on Secure IT Systems, Nordsec 2019, Nov 2019, Aalborg, Denmark. pp.221-237,
- Jean-Max Dutertre, Alexandre Menu, Olivier Potin, Jean-Baptiste Rigaud, and Jean-Luc Danger, "Experimental analysis of the electromagnetic instruction skip fault model and consequences for software countermeasures", Microelectronics Reliability, Volume 121, 2021, 114133, ISSN 0026-2714,
- Ludovic Claudepierre, Pierre-Yves Péneau, Damien Hardy, and Erven Rohou, 2021, "Traitor: A low-cost evaluation platform for multifault injection", Proceedings of the 2021 International Symposium on Advanced Security on Software and Systems (ASSS '21), Association for Computing Machinery, New York, NY, USA, 51-56.

In such a case, if the candidate signature elements fulfill the other tests, that are not skipped, the reference signature generation algorithm reproduced on **Figures 1, 2 or 3** would output an invalid signature ($\tilde{c}$, **z, h**).

An attacker skipping the test on the second test vector **r0,** could obtain as output an invalid signature from which he could derive an inequality on the coefficients of either the vector $\mathbf{s_1}$ or the vector $\mathbf{s_2}$, which are parts of the signature secret key sk. Therefore, an attacker gathering a large enough number of different invalid signatures could obtain a system of inequations whose only solution is either the vector $\mathbf{s_1}$ or the vector $\mathbf{s_2}$, depending on which test has been skipped for generating the signatures. The attacker could then retrieve this vector by solving the obtained system of inequations. After retrieving the vector $\mathbf{s_1}$ or the vector $\mathbf{s_2}$, the attacker could deduce the other of these two vectors, and then forge valid signatures using the vectors $\mathbf{s_1}$ and $\mathbf{s_2}$.

In order to prevent an attacker bypassing by fault injection attacks the tests on the second test vector **r0** from obtaining invalid signatures as outputs of the signature generation algorithm, the main idea of the invention is to modify the norm check performed on the second test vector **r0** in such a way that if this check is skipped, the candidate signature is rejected by the subsequent test performed on the fourth vector of polynomials **h.**

Such a result may be achieved by applying to the second test vector **r0,** before they get tested, a transformation such that the test on the fourth vector of polynomials **h** would fail, and to modify the test performed on the second test vector **r0** to take this transformation into account and to undo it only if the test performed on the second test vector **r0** is successful. As a result, if the test on the second test vector **r0** is skipped because of a fault injection attack, the applied transformation will not be canceled and the test on the fourth vector of polynomials **h** will fail, and the invalid candidate signature will be rejected. Therefore, the attacker will not get it as an output and will not be able to use it for deriving an inequality on the vector $\mathbf{s_1}$ or $\mathbf{s_2}$.

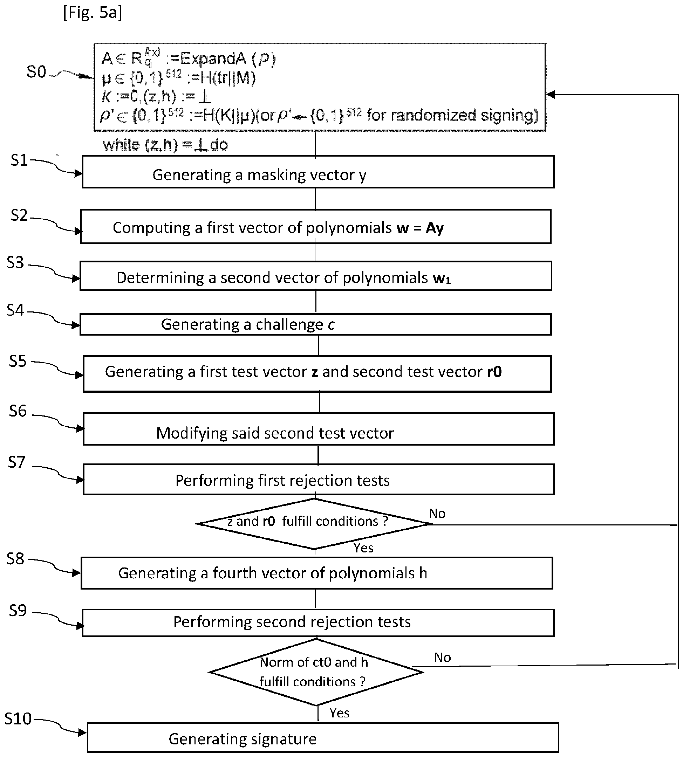

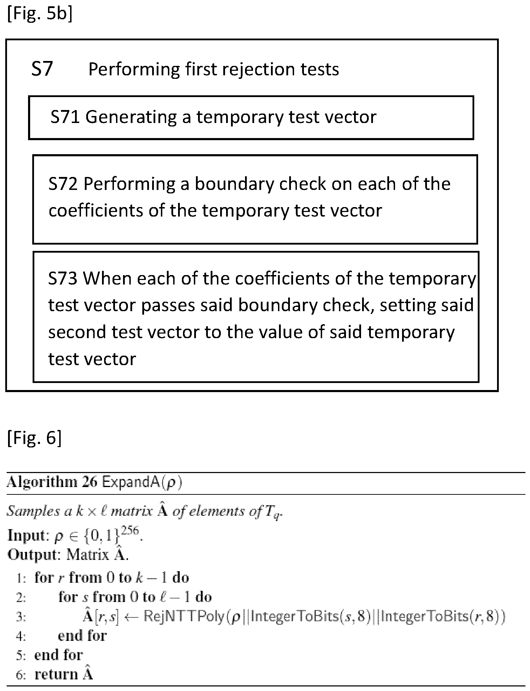

The following paragraphs describe with more details the steps of the method according to the invention for generating a signature $\sigma = (\tilde{c}, \mathbf{z}, \mathbf{h})$ of a message M as described in **Figures 5a and 5b.**

The steps S0 to S5 described below are not specific to the invention and are taken from FIPS 204, from Dilithium specification 3.1 and reference implementation of Dilithium scheme referenced above. They are provided as an exemplar implementation of all the steps of a Dilithium based signature generation algorithm performed before the candidate signature is subject to the rejection tests. The present invention may be applied similarly to any other existing implementation of these steps preceding the rejection tests.

As a preliminary step S0, the matrix A may be generated from the element $\rho$ of the secret key, for example using the function ExpandA, as defined in Algorithm 26 of FIPS 204 and reproduced on **Figure 6,** or as defined at §5.3 of Dilithium specification 3.1.

This function takes as input an element called seed, $\rho$, that is part of the secret key.

A value $\mu$ depending on the message M to be signed may be generated, for example as H($tr$‖M, 512) in FIPS 204 or as H($tr$‖M) in Dilithium specification 3.1 and in the reference implementation, with H a hash function. A value $\kappa$ is set to 0.

A value $\rho'$ may be generated as H(K‖rnd‖$\mu$) in

FIPS 204 or as H(K‖μ) in Dilithium specification 3.1 and in the reference implementation, with K the second element of the secret key and rnd a 256-bits constant value or random value.

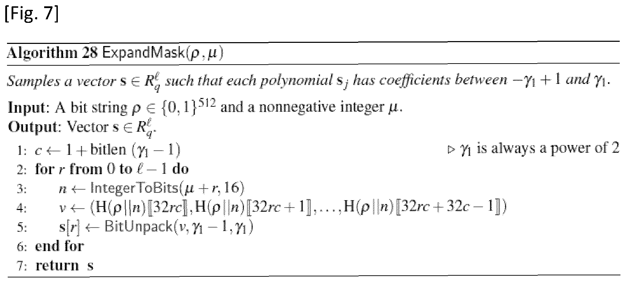

In a first step S1, the cryptographic device may generate the masking vector **y** as ExpandMask($\rho'$, $\kappa$) using the ExpandMask function, as defined in Algorithm 28 of FIPS 204 and reproduced on **Figure 7,** or as defined in §5.3 of Dilithium specification 3.1.

This function takes as input an element $\rho'$, that fits into 512 bits and a nonce $\kappa$, where $\kappa$ starts to 0 and is incremented at each sampled polynomial.

In a second step S2, the cryptographic device computes the first vector of polynomials **w = Ay.**

In a third step S3, the cryptographic device determines the second vector of polynomials **w₁** corresponding to the first vector of polynomials **w,** such that every polynomial coefficient **wⁱ** in **Ay,** with i in 0, ..., k-1, is

written as $\mathbf{w^i} = \mathbf{w_1}^i \cdot 2\gamma_2 + \mathbf{w_0}^i$ where $\left\| \left\| w_0^i \right\| \right\|_\infty \leq \gamma_2$ with **w₀** a third vector of polynomials. In the reference implementation it also determines the third vector of polynomials **w₀** itself.

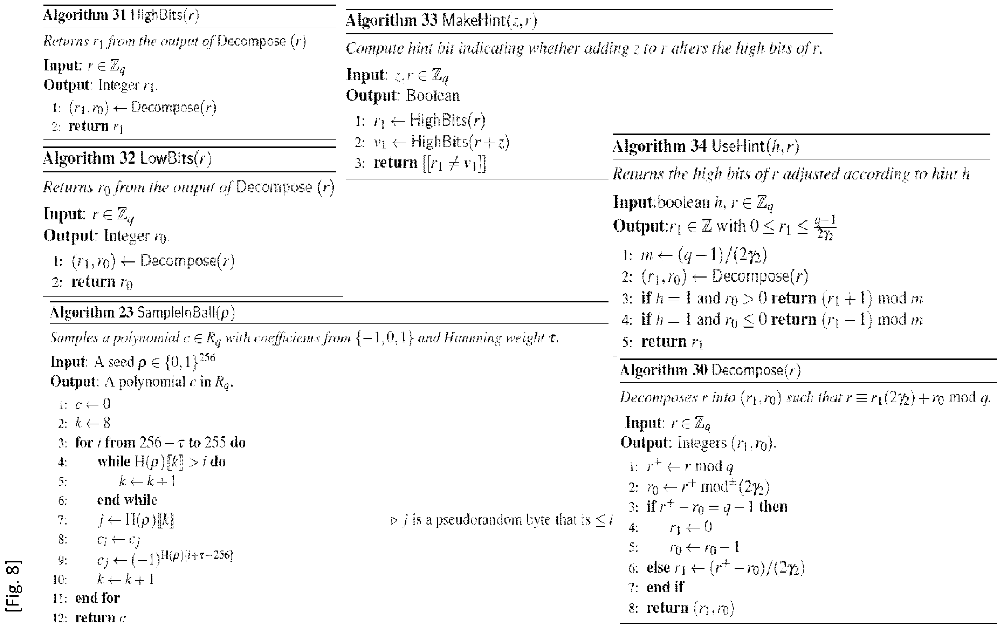

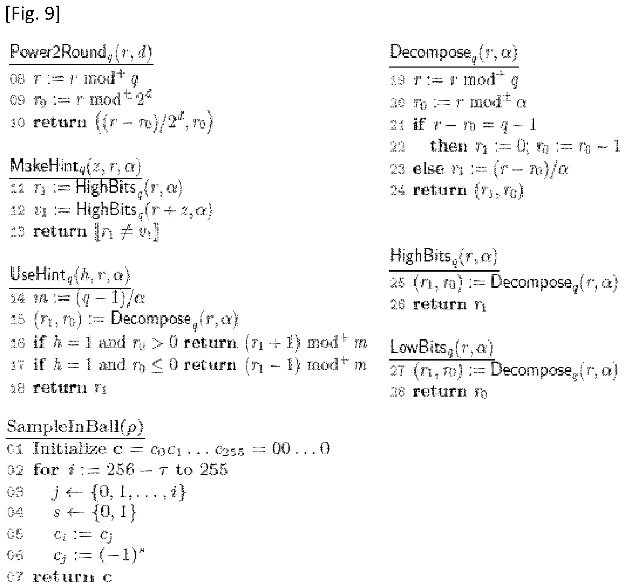

For example, the cryptographic device may perform iteratively the second step S2, and the third step S3. At each iteration i, with i in {0, ..., k-1}, of the second step, it computes one coefficient **wⁱ** of the first vector of polynomials **w** by computing $\mathbf{w^i} = (\mathbf{Ay})^i$. And at each iteration i with i in {0, ..., k-1} of the third step S3 following the iteration i of the second step S2, the cryptographic device may determine the corresponding $i^{th}$ coefficients **w₁ⁱ** (and **w₀ⁱ** in the reference implementation) of the second vector of polynomials **w₁** (and the third vector of polynomials **w₀** if needed) corresponding to a decomposition of the first vector of polynomials **w.** In the case of FIPS204, it is done by computing $\mathbf{w_1}^i = \text{HighBits}(\mathbf{w^i})$. The function HighBits, and the associated function Decompose are defined by algorithms 30 and 31 of FIPS204 and reproduced on **Figure 8.** In Dilithium specification 3.1 it is done by computing $\mathbf{w_1}^i = \text{HighBits}_q(\mathbf{w^i}, 2\gamma_2)$. The function HighBits$_q$ is defined in§2.3 of Dilithium specification 3.1 and reproduced on **Figure 9.** In the case of the reference implementation it is done by computing $\mathbf{w_1}^i$, $\mathbf{w_0}^i = \text{Decompose}_q(\mathbf{w^i}, 2\gamma_2)$. The function Decompose$_q$ is also defined in §2.3 of Dilithium specification 3.1 and reproduced on **Figure 9.**

In a fourth step S4, the cryptographic device generates the challenge c from the value $\mu$ which has been derived from the message M to be signed at the preliminary step S0, and from the coefficients of the second vector of polynomials **w₁**. For example, in FIPS 204: c = SampleInBall(c1) with c1 the 256 first bits of H($\mu$‖**w1**°‖ ... ‖**w1**$^{k-1}$, 2λ) using the function SampleInBall defined in Algorithm 23 of FIPS204 and reproduced on **Figure 8** and the hash function H. In Dilithium specification 3.1 and reference implementation, $c$ = SampleInBall(H($\mu$‖**w1**⁰‖ ... ‖**w1**$^{k-1}$) using the function SampleInBall defined in §2.3 of Dilithium specification 3.1 and reproduced on **Figure 9.**

The "SampleInBall" routine is using the SHAKE-256 algorithm to generate a stream of random bytes from a value called seed. The first $\tau$ bits in the first 8 bytes of the random stream are interpreted as $\tau$ random sign bits in the polynomial c, and each sign bit can either be 0 or 1. The remaining 64 - $\tau$ bits are discarded. The rest of the random stream is used in a rejection sampling loop, where the next byte of the random stream from SHAKE-256 is interpreted as a number in the set {0, . . . , 255}. We use the corresponding sign in order to determine if it is a 1 or a -1 value.

In a fifth step S5, the cryptographic device generates the first test vector **z** as **y** + c**s₁**; and the second test vector **r0** as LowBits(**w**-c**s₂**) in FIPS 204, as LowBits$_q$(**w**-c**s₂**, $2\gamma_2$) in Dilithium specification 3.1 or in the reference implementation, the function LowBits being defined by algorithm 32 of FIPS 204 and reproduced on **Figure 8** and the function LowBits$_q$ being defined in §2.3 of Dilithium specification 3.1 and reproduced on **Figure 9.**

Then, the cryptographic device will perform rejection tests in order to determine if the masking vector **y** generated in the first step enables the generation of a secure signature. These rejection tests comprise first rejection tests checking if the first test vector **z** and then the second test vector **r0** fulfill predetermined conditions; and second rejection tests on the third test vector $c\mathbf{t_0}$ and on the fourth vector of polynomials **h** as described below. Regarding the fourth vector of polynomials **h,** it is particularly checked that $|\mathbf{h}|_{hj=1} <\_ \omega$ with $\omega$ a predetermined maximum number of coefficients equal to 1 among all the coefficients of the fourth vector of polynomials **h.**

Before performing the first rejection tests, during a sixth step S6, the cryptographic device modifies the second test vector to protect against an attacker skipping the corresponding first rejection test. The modified test vector is modified by applying to it a first transformation such that at least $\omega+1$ coefficients of the modified second test vector of polynomials are in [$\gamma_2$ , q[ with a probability greater than a predetermined threshold. The first transformation is such that the modified second test vector leads to a failure of one of the second rejection tests performed later when the modified test vector is not returned to its original value before performing the second rejection tests. Such a transformation may for example be an arithmetic operation such as adding a random vector of polynomials such that the coefficients of the modified second test vector are in [$2^{17}$; $2^{18}$]. Alternatively, the first transformation may consist in squaring each coefficient of the second test vector or multiplying it by an inversible polynomial.

Then, in a seventh step S7, the cryptographic device performs the first rejection tests, which comprises checking whether the infinity norm of the first test vector of polynomials **z** and the infinity norm of the second test vector of polynomials **r0** fulfill predetermined conditions. In FIPS 204, Dilithium specification 3.1 and the reference implementation, in which neither the first test vector of polynomials z nor the second test vector of polynomials **r0** is modified as in the sixth step S6 described above, the first rejection tests consist in checking whether the infinity norm of the first test vector z is lower than $\gamma_1$ - $\beta$ : $\|z\|_\infty < \gamma_1 - \beta$ and checking whether the infinity norm of the second test vector **r0** is lower than - $\beta$ : $\|r0\|_\infty < \gamma_2 - \beta$. For a vector of polynomials, the infinity norm is defined as the maximum value among all the coefficients of all the polynomials of the vector of polynomials.

In the present method, the second test vector has been transformed. The check usually performed on the norm of the test vector which has been subject to a transformation has to be modified in order to take into account this transformation. Therefore, in the seventh step S7, for the modified second test vector, checking if a test vector of polynomials fulfills predetermined conditions comprises the following sub steps.

In a first sub step S71, the cryptographic device generates a temporary test vector by applying to the modified second test vector an inverse transformation of the first transformation. As a result, the temporary test vector is equal to the original value of the second test vector that has been modified in the sixth step.

In a second sub step S72, the cryptographic device performs a boundary check on each of the coefficients of the temporary test vector. The cryptographic device may test if the infinity norm of each coefficient of the second test vector **r0** is lower than - $\beta$.

When each of the coefficients of the temporary test vector passes the boundary check of the second sub step S72, the cryptographic device, in a third substep S73, sets the modified second test vector to the value of the temporary test vector, which is equivalent to setting back the modified test vector to its original value. This operation is part of performing the first rejection test on the second test vector which has been modified. It is done only after the cryptographic device has verified that the candidate signature passes the first rejection test. Therefore, when the first rejection test on the second test vector is skipped, the modified second test vector will not be set back to its original value and the second rejection test described below will fail.

Then, in an eight step S8, when the candidate signature has passed the first rejection tests, the cryptographic device generates a fourth vector of polynomials **h** of the Crystals-Dilithium digital signature $\sigma$ based on the second test vector **r0** and on the value $ct_0$.

For example in FIPS 204, **h** = MakeHint(-$ct_0$, w -$cs_2$ + $ct_0$), using the MakeHint function defined by Algorithm 33 of FIPS 204 and reproduced on Figure 8. In Dilithium specification 3.1 **h** = MakeHint$_q$(-$ct_0$, **w** -$cs_2$ + $ct_0$, $2\gamma_2$). The MakeHint$_q$ function is defined in§2.3 of Dilithium specification 3.1 and reproduced on Figure 9.

Since **w** -$cs_2$ = r0, assumption is made that in the computation of h, the value of **w** -$cs_2$ is obtained by just reusing the value of the second test vector r0.

In the reference implementation **h** = MakeHint$_q$ (-$ct_0$, $r_0$+ $ct_0$, $2\gamma_2$). In this case, MakeHint$_q$ is a function returning 0 when - < **w0** - **cs2** + $ct_0$ $\leq$ and returns 1 otherwise and when both **w0** - **cs2** + ct0 = -$\gamma_2$ and **w0** =1.

Then, in a ninth step S9, the cryptographic device performs the second rejection tests, comprising testing if the infinity norm of the third test vector of polynomials $ct_0$ and the generated fourth vector of polynomials h fulfills predetermined conditions.

More precisely, it checks if the infinity norm of the value $ct_0$ is lower than : $\|ct0\|_\infty < \gamma_2$ ; and if the fourth vector of polynomials **h** verifies the fourth condition: | $h|_{hj=1}$ <_ $\omega$ with $\omega$ the maximum number of coefficients equal to 1 among all the coefficients of the fourth vector of polynomials **h.**

If the first rejection test for the modified second test vector has been skipped, for example as a result as a fault injection attack by an attacker, the modified second test vector will not have been returned to its original value and the second rejection tests on the fourth vector of polynomials **h** will fail, leading to a rejection of the candidate signature.

In a tenth step S10, when said first rejection tests and second rejection tests have been passed, ensuring that all conditions are met, the first test vector **z** and the fourth vector of polynomials **h** may be used respectively as second and third elements of the signature to be generated and the signature is generated from the packed challenge $\tilde{c}$, from said first test vector **z,** and from the fourth vector of polynomials **h.**

If any of the first rejection tests and second rejection tests fails, the cryptographic device restarts the signature generation at the first step in order to generate a new masking vector **y.** All steps from the first step to the ninth step being repeated until all tests are satisfied and a signature is generated.

According to a second aspect, the invention relates to a computer program product directly loadable into the memory of at least one computer, comprising software code instructions for performing, when said product is run on the computer, the steps of the methods described here before.

According to a third aspect, the invention is also related to a cryptographic device 100 comprising a processor and a memory described here before and configured for performing the steps of the methods described above.

In addition to these features, the computer program and the cryptographic device according to the second and third aspects of the invention may be configured for performing or may comprise any other features described here before.

As a result, the Crystals-Dilithium signature generation process is protected against fault injection attacks aiming at skipping the first rejection test on the second test vector for retrieving invalid signatures and extracting from it information about the signature secret key. When the first rejection test on the second test vector protected according to the present invention is skipped, the second rejection test on the fourth vector of polynomials **h** will fail and the candidate signature will be rejected instead of being output to the attacker. Therefore, no information about the secret key is leaked from an invalid signature as a consequence of such a fault injection attack.

## Claims

1. A method for securing against physical attacks the execution of a generation method of a Crystals-Dilithium based digital signature $\sigma = (\bar{c}, z, h)$ of a message M with a secret key sk = $(\rho, K, tr, s_1, s_2, t_0)$ where $\rho$, K, tr are 256 bits binary values, $s_1$ and $s_2$ are vectors of length l, respectively k, of elements of a ring $R_q = Z_q[X]/(X^n + 1)$ whose coefficients' absolute values are lower than a first predetermined value $\eta$, and $t_0$ is a polynomial vector of length k with k, l, n and q integers,

said Crystals-Dilithium based digital signature generation method comprising :

a) generating (S1) a masking vector **y,** of length l, of polynomials with coefficients whose absolute values are less than a second predetermined value $\gamma_1$,
b) computing (S2) a first vector of polynomials, of length k, **w = Ay,** where **A** is a k × l matrix each of whose entries is a polynomial in the ring $R_q$,
c) determining (S3) a second vector of polynomials $w_1$ of length k, where every polynomial coefficient $w^i$ in **Ay,** with i in 0, ..., k-1, is written as $w^i = w_1^i \cdot 2\gamma_2 + w_0^i$ where

$$\left\| w_0^i \right\|_\infty \leq \gamma_2$$

with a third predetermined value and $w_0$ is a third vector of polynomials of length k,
d) generating (S4) a challenge c based on the message and the second vector of polynomials $w_1$,
e) generating (S5) a first test vector of polynomials **z** as equal to $y + cs_1$, and a second test vector of polynomials **r0,**
f) performing first rejection tests (S7) comprising checking if the first test vector of polynomials **z** and the second test vector of polynomials **r0** fulfill predetermined conditions, and
g) when said conditions are not fulfilled, restarting signature generation from step a),
h) else when said conditions are fulfilled, generating (S8) a fourth vector of polynomials **h** of the Crystals-Dilithium digital signature $\sigma$ based on said second test vector of polynomial **r0** and performing second rejection tests (S9) comprising checking that the norm of a third test vector of polynomials $ct_0$ fulfills a predetermined condition and that the generated fourth vector of polynomials **h** is such that $|h|_{hj=1} \leq \omega$ with $\omega$ a predetermined maximum number of coefficients equal to 1 among all the coefficients of the fourth vector of polynomials **h,**
i) when said conditions on the third test vector $ct_0$ or on the fourth vector of polynomials **h** are not fulfilled, restarting the signature generation from step a), else generating said signature (S10),

the steps a), to i) being repeated until all conditions are satisfied,
said method being performed by a cryptographic device (100) comprising a processor (101) and a memory (103),
and comprising : before performing said first rejection test, modifying (S6) the second test vector of polynomials by applying to it a first transformation such that at least $\omega+1$ coefficients of the modified second test vector of polynomials are in [$\gamma_2$ , q[ with a probability greater than a predetermined threshold,
and wherein checking if the second test vector of polynomials fulfills predetermined conditions when performing the first rejection tests (S7) comprises for the modified second test vector:

- generating (S71) a temporary test vector by applying to said modified second test vector an inverse transformation of the first transformation,
- performing (S72) a boundary check on each of the coefficients of the temporary test vector,
- when each of the coefficients of the temporary test vector passes said boundary check, setting (S73) said second test vector to the value of said temporary test vector.

2. The method of claim 1 wherein said first transformation comprises adding a random vector of polynomials such that the coefficients of the modified second test vector are in [$2^{17}$; $2^{18}$].

3. The method of claim 1 or 2, wherein n=256 and q= $2^{23}$-$2^{13}$+1.

4. A computer program product directly loadable into the memory of at least one computer, comprising software code instructions for performing the steps of any one of claim 1 to 3 when said product is run on the computer.

**5.** A cryptographic device (100) comprising a processor (101) and a memory (103) configured for performing the steps of any one of claim 1 to 3.

## Algorithm 1 ML-DSA.KeyGen()

*Generates a public-private key pair.*

**Output:** Public key, $pk \in \mathbb{B}^{32+32k(\text{bitlen}\ (q-1)-d)}$,
and private key, $sk \in \mathbb{B}^{32+32+64+32\cdot((\ell+k)\cdot\text{bitlen}\ (2\eta)+dk)}$.

1: $\xi \leftarrow \{0,1\}^{256}$      $\triangleright$ Choose random seed
2: $(\rho,\rho',K) \in \{0,1\}^{256} \times \{0,1\}^{512} \times \{0,1\}^{256} \leftarrow H(\xi,1024)$   $\triangleright$ Expand seed
3: $\hat{A} \leftarrow \text{ExpandA}(\rho)$    $\triangleright$ A is generated and stored in NTT representation as $\hat{A}$
4: $(s_1,s_2) \leftarrow \text{ExpandS}(\rho')$
5: $t \leftarrow \text{NTT}^{-1}(\hat{A} \circ \text{NTT}(s_1)) + s_2$     $\triangleright$ Compute $t = As_1 + s_2$
6: $(t_1,t_0) \leftarrow \text{Power2Round}(t,d)$      $\triangleright$ Compress t
7: $pk \leftarrow \text{pkEncode}(\rho,t_1)$
8: $tr \leftarrow H(\text{BytesToBits}(pk),512)$
9: $sk \leftarrow \text{skEncode}(\rho,K,tr,s_1,s_2,t_0)$     $\triangleright$ K and $tr$ are for use in signing
10: **return** $(pk,sk)$

---

## Algorithm 3 ML-DSA.Verify($pk, M, \sigma$)

*Verifies a signature $\sigma$ for a message M.*

**Input:** Public key, $pk \in \mathbb{B}^{32+32k(\text{bitlen}\ (q-1)-d)}$ and message $M \in \{0,1\}^*$.
**Input:** Signature, $\sigma \in \mathbb{B}^{32+\ell\cdot32\cdot(1+\text{bitlen}\ (\gamma_1-1))+\omega+k}$.
**Output:** Boolean

1: $(\rho,t_1) \leftarrow \text{pkDecode}(pk)$
2: $(\tilde{c},z,h) \leftarrow \text{sigDecode}(\sigma)$    $\triangleright$ Signer's commitment hash $\tilde{c}$, response z and hint h
3: **if** $h = \perp$ **then return** false      $\triangleright$ Hint was not properly encoded
4: **end if**
5: $\hat{A} \leftarrow \text{ExpandA}(\rho)$    $\triangleright$ A is generated and stored in NTT representation as $\hat{A}$
6: $tr \leftarrow H(\text{BytesToBits}(pk),512)$
7: $\mu \leftarrow H(tr\|M,512)$      $\triangleright$ Compute message representative $\mu$
8: $(\tilde{c}_1,\tilde{c}_2) \in \{0,1\}^{256} \times \{0,1\}^{2\lambda-256} \leftarrow \tilde{c}$
9: $c \leftarrow \text{SampleInBall}(\tilde{c}_1)$      $\triangleright$ Compute verifier's challenge from $\tilde{c}$
10: $w'_{\text{Approx}} \leftarrow \text{NTT}^{-1}(\hat{A} \circ \text{NTT}(z) - \text{NTT}(c) \circ \text{NTT}(t_1 \cdot 2^d))$   $\triangleright\ w'_{\text{Approx}} = Az - ct_1 \cdot 2^d$
11: $w'_1 \leftarrow \text{UseHint}(h, w'_{\text{Approx}})$     $\triangleright$ Reconstruction of signer's commitment
12: $\tilde{c}' \leftarrow H(\mu\|\text{w1Encode}(w'_1),2\lambda)$    $\triangleright$ Hash it; this should match $\tilde{c}$
13: **return** $[[\ \|z\|_\infty < \gamma_1 - \beta]]$ **and** $[[\tilde{c} = \tilde{c}']]$ **and** [[number of 1's in h is $\leq \omega$]]

---

## Algorithm 2 ML-DSA.Sign($sk, M$)

*Generates a signature for a message M.*

**Input:** Private key, $sk \in \mathbb{B}^{32+32+64+32\cdot((\ell+k)\cdot\text{bitlen}\ (2\eta)+dk)}$ and the message $M \in \{0,1\}^*$.
**Output:** Signature, $\sigma \in \mathbb{B}^{32+\ell\cdot32\cdot(1+\text{bitlen}\ (\gamma_1-1))+\omega+k}$.

1: $(\rho,K,tr,s_1,s_2,t_0) \leftarrow \text{skDecode}(sk)$
2: $\hat{s}_1 \leftarrow \text{NTT}(s_1)$
3: $\hat{s}_2 \leftarrow \text{NTT}(s_2)$
4: $\hat{t}_0 \leftarrow \text{NTT}(t_0)$
5: $\hat{A} \leftarrow \text{ExpandA}(\rho)$    $\triangleright$ A is generated and stored in NTT representation as $\hat{A}$
6: $\mu \leftarrow H(tr\|M,512)$     $\triangleright$ Compute message representative $\mu$
7: $rnd \leftarrow \{0,1\}^{256}$   $\triangleright$ For the optional deterministic variant, substitute $rnd \leftarrow \{0\}^{256}$
8: $\rho' \leftarrow H(K\|rnd\|\mu,512)$      $\triangleright$ Compute private random seed
9: $\kappa \leftarrow 0$         $\triangleright$ Initialize counter $\kappa$
10: $(z,h) \leftarrow \perp$
11: **while** $(z,h) = \perp$ **do**      $\triangleright$ Rejection sampling loop
12:   $y \leftarrow \text{ExpandMask}(\rho',\kappa)$
13:   $w \leftarrow \text{NTT}^{-1}(\hat{A} \circ \text{NTT}(y))$
14:   $w_1 \leftarrow \text{HighBits}(w)$      $\triangleright$ Signer's commitment
15:   $\tilde{c} \in \{0,1\}^{2\lambda} \leftarrow H(\mu\|\text{w1Encode}(w_1),2\lambda)$     $\triangleright$ Commitment hash
16:   $(\tilde{c}_1,\tilde{c}_2) \in \{0,1\}^{256} \times \{0,1\}^{2\lambda-256} \leftarrow \tilde{c}$   $\triangleright$ First 256 bits of commitment hash
17:   $c \leftarrow \text{SampleInBall}(\tilde{c}_1)$      $\triangleright$ Verifier's challenge
18:   $\hat{c} \leftarrow \text{NTT}(c)$
19:   $\langle\langle cs_1\rangle\rangle \leftarrow \text{NTT}^{-1}(\hat{c} \circ \hat{s}_1)$
20:   $\langle\langle cs_2\rangle\rangle \leftarrow \text{NTT}^{-1}(\hat{c} \circ \hat{s}_2)$
21:   $z \leftarrow y + \langle\langle cs_1\rangle\rangle$      $\triangleright$ Signer's response
22:   $r_0 \leftarrow \text{LowBits}(w - \langle\langle cs_2\rangle\rangle)$
23:   **if** $\|z\|_\infty \geq \gamma_1 - \beta$ **or** $\|r_0\|_\infty \geq \gamma_2 - \beta$ **then** $(z,h) \leftarrow \perp$   $\triangleright$ Validity checks
24:   **else**
25:    $\langle\langle ct_0\rangle\rangle \leftarrow \text{NTT}^{-1}(\hat{c} \circ \hat{t}_0)$
26:    $h \leftarrow \text{MakeHint}(-\langle\langle ct_0\rangle\rangle, w - \langle\langle cs_2\rangle\rangle + \langle\langle ct_0\rangle\rangle)$    $\triangleright$ Signer's hint
27:    **if** $\|\langle\langle ct_0\rangle\rangle\|_\infty \geq \gamma_2$ or the number of 1's in h is greater than $\omega$, **then** $(z,h) \leftarrow \perp$
28:    **end if**
29:   **end if**
30:   $\kappa \leftarrow \kappa + \ell$       $\triangleright$ Increment counter
31: **end while**
32: $\sigma \leftarrow \text{sigEncode}(\tilde{c}, z \bmod^\pm q, h)$
33: return $\sigma$

[Fig. 1]

[Fig. 2]

<u>Gen</u>

$\zeta \leftarrow \{0,1\}^{256}$

$(\rho, \rho', K) \in \{0,1\}^{256} \times \{0,1\}^{512} \times \{0,1\}^{256} := H(\zeta)$ ▷ H is instantiated as SHAKE-256

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$(\mathbf{s}_1, \mathbf{s}_2) \in S_\eta^\ell \times S_\eta^k := \mathsf{ExpandS}(\rho')$

$\mathbf{t} := \mathbf{A}\mathbf{s}_1 + \mathbf{s}_2$ ▷ Compute $\mathbf{A}\mathbf{s}_1$ as $\mathrm{NTT}^{-1}(\hat{\mathbf{A}} \cdot \mathrm{NTT}(\mathbf{s}_1))$

$(\mathbf{t}_1, \mathbf{t}_0) := \mathsf{Power2Round}_q(\mathbf{t}, d)$

$tr \in \{0,1\}^{256} := H(\rho \| \mathbf{t}_1)$

**return** $(pk = (\rho, \mathbf{t}_1), sk = (\rho, K, tr, \mathbf{s}_1, \mathbf{s}_2, \mathbf{t}_0))$

<u>Sign$(sk, M)$</u>

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$\mu \in \{0,1\}^{512} := H(tr \| M)$

$\kappa := 0, (\mathbf{z}, \mathbf{h}) := \bot$

$\rho' \in \{0,1\}^{512} := H(K \| \mu)$ (or $\rho' \leftarrow \{0,1\}^{512}$ for randomized signing)

**while** $(\mathbf{z}, \mathbf{h}) = \bot$ **do** ▷ Pre-compute $\hat{\mathbf{s}}_1 := \mathrm{NTT}(\mathbf{s}_1)$, $\hat{\mathbf{s}}_2 := \mathrm{NTT}(\mathbf{s}_2)$, and $\hat{\mathbf{t}}_0 := \mathrm{NTT}(\mathbf{t}_0)$

    $\mathbf{y} \in \tilde{S}_{\gamma_1}^\ell := \mathsf{ExpandMask}(\rho', \kappa)$

    $\mathbf{w} := \mathbf{A}\mathbf{y}$ ▷ $\mathbf{w} := \mathrm{NTT}^{-1}(\hat{\mathbf{A}} \cdot \mathrm{NTT}(\mathbf{y}))$

    $\mathbf{w}_1 := \mathsf{HighBits}_q(\mathbf{w}, 2\gamma_2)$

    $\tilde{c} \in \{0,1\}^{256} := H(\mu \| \mathbf{w}_1)$

    $c \in B_\tau := \mathsf{SampleInBall}(\tilde{c})$ ▷ Store $c$ in NTT representation as $\hat{c} = \mathrm{NTT}(c)$

    $\mathbf{z} := \mathbf{y} + c\mathbf{s}_1$ ▷ Compute $c\mathbf{s}_1$ as $\mathrm{NTT}^{-1}(\hat{c} \cdot \hat{\mathbf{s}}_1)$

    $\mathbf{r}_0 := \mathsf{LowBits}_q(\mathbf{w} - c\mathbf{s}_2, 2\gamma_2)$ ▷ Compute $c\mathbf{s}_2$ as $\mathrm{NTT}^{-1}(\hat{c} \cdot \hat{\mathbf{s}}_2)$

    **if** $\|\mathbf{z}\|_\infty \geq \gamma_1 - \beta$ **or** $\|\mathbf{r}_0\|_\infty \geq \gamma_2 - \beta$, **then** $(\mathbf{z}, \mathbf{h}) := \bot$

    **else**

        $\mathbf{h} := \mathsf{MakeHint}_q(-c\mathbf{t}_0, \mathbf{w} - c\mathbf{s}_2 + c\mathbf{t}_0, 2\gamma_2)$ ▷ Compute $c\mathbf{t}_0$ as $\mathrm{NTT}^{-1}(\hat{c} \cdot \hat{\mathbf{t}}_0)$

        **if** $\|c\mathbf{t}_0\|_\infty \geq \gamma_2$ **or** the # of 1's in $\mathbf{h}$ is greater than $\omega$, **then** $(\mathbf{z}, \mathbf{h}) := \bot$

    $\kappa := \kappa + \ell$

**return** $\sigma = (\tilde{c}, \mathbf{z}, \mathbf{h})$

<u>Verify$(pk, M, \sigma = (\tilde{c}, \mathbf{z}, \mathbf{h}))$</u>

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$\mu \in \{0,1\}^{512} := H(H(\rho \| \mathbf{t}_1) \| M)$

$c := \mathsf{SampleInBall}(\tilde{c})$

$\mathbf{w}_1' := \mathsf{UseHint}_q(\mathbf{h}, \mathbf{A}\mathbf{z} - c\mathbf{t}_1 \cdot 2^d, 2\gamma_2)$ ▷ Compute as $\mathrm{NTT}^{-1}(\hat{\mathbf{A}} \cdot \mathrm{NTT}(\mathbf{z}) - \mathrm{NTT}(c) \cdot \mathrm{NTT}(\mathbf{t}_1 \cdot 2^d))$

**return** $[\![\|\mathbf{z}\|_\infty < \gamma_1 - \beta]\!]$ **and** $[\![\tilde{c} = H(\mu \| \mathbf{w}_1')]\!]$ **and** $[\![\# \text{ of 1's in } \mathbf{h} \text{ is } \leq \omega]\!]$

[Fig. 3]

---

**Algorithm 3** Sig

---

**Require:** $sk, M$
**Ensure:** $\sigma = (\tilde{c}, \mathbf{z}, \mathbf{h})$

1: $\mathbf{A} \in \mathcal{R}_q^{k \times l} := \mathtt{ExpandA}(\rho)$ $\quad\quad\quad\quad$ $\triangleright$ $\mathbf{A}$ is generated and stored in NTT as $\hat{\mathbf{A}}$

2: $\mu \in \{0,1\}^{512} := \mathrm{H}(tr \,\|\, M)$

3: $\kappa := 0$, $(\mathbf{z}, \mathbf{h}) := \perp$

4: $\rho' \in \{0,1\}^{512} := \mathrm{H}(K \,\|\, \mu)$

5: **while** $(\mathbf{z}, \mathbf{h}) = \perp$ **do** $\triangleright$ Pre-compute $\hat{s}_1 := \mathtt{NTT}(\mathbf{s}_1)$, $\hat{s}_2 := \mathtt{NTT}(\mathbf{s}_2)$ and $\hat{\mathbf{t}}_0 := \mathtt{NTT}(\mathbf{t}_0)$

6: $\quad\quad \mathbf{y} \in \tilde{S}_{\gamma_1}^l := \mathtt{ExpandMask}(\rho', \kappa)$

7: $\quad\quad \mathbf{w} := \mathbf{A}\,\mathbf{y}$ $\quad\quad\quad\quad\quad\quad\quad\quad\quad$ $\triangleright$ $\mathbf{w} := \mathtt{NTT}^{-1}(\hat{\mathbf{A}} \cdot \mathtt{NTT}(\mathbf{y}))$

8: $\quad\quad \mathbf{w}_1 = \mathtt{HighBits}_q(\mathbf{w}, 2\,\gamma_2)$

9: $\quad\quad \tilde{c} \in \{0,1\}^{256} := \mathrm{H}(\mu \,\|\, \mathbf{w}_1)$

10: $\quad\quad c \in B_\tau := \mathtt{SampleInBall}(\tilde{c})$ $\quad\quad$ $\triangleright$ Store $c$ in NTT representation as $\hat{c} = \mathtt{NTT}(c)$

11: $\quad\quad \mathbf{z} := \mathbf{y} + c\,\mathbf{s}_1$ $\quad\quad\quad\quad\quad\quad\quad$ $\triangleright$ Compute $c\mathbf{s}_1$ as $\mathtt{NTT}^{-1}(\hat{c} \cdot \hat{s}_1)$

12: $\quad\quad \mathbf{r}_0 := \mathtt{LowBits}_q(\mathbf{w} - c\mathbf{s}_2, 2\,\gamma_2)$ $\quad\quad$ $\triangleright$ Compute $c\mathbf{s}_2$ as $\mathtt{NTT}^{-1}(\hat{c} \cdot \hat{s}_2)$

13: $\quad\quad$ **if** $\|\mathbf{z}\|_\infty \geq \gamma_1 - \beta$ or $\|\mathbf{r}_0\|_\infty \geq \gamma_2 - \beta$ **then**

14: $\quad\quad\quad\quad (\mathbf{z}, \mathbf{h}) := \perp$

15: $\quad\quad$ **else**

16: $\quad\quad\quad\quad \mathbf{h} := \mathtt{MakeHint}_q(-c\mathbf{t}_0, \mathbf{r}_0 + c\mathbf{t}_0, 2\gamma_2)$ $\quad\quad$ $\triangleright$ Compute $c\,\mathbf{t}_0$ as $\mathtt{NTT}^{-1}(\hat{c} \cdot \hat{\mathbf{t}}_0)$

17: $\quad\quad\quad\quad$ **if** $\|c\mathbf{t}_0\|_\infty \geq \gamma_2$ or $|\mathbf{h}|_{\mathbf{h}_j=1} > \omega$ **then**

18: $\quad\quad\quad\quad\quad\quad (\mathbf{z}, \mathbf{h}) := \perp$

19: $\quad\quad \kappa := \kappa + l$

20: **return** $\sigma = (\tilde{c}, \mathbf{z}, \mathbf{h})$

---

[Fig. 4]

[Fig. 5a]

S0

$A \in R_q^{k \times l} := \text{ExpandA} (\rho)$
$\mu \in \{0,1\}^{512} := H(tr\|M)$
$K := 0, (z,h) := \perp$
$\rho' \in \{0,1\}^{512} := H(K\|\mu)(\text{or } \rho' \leftarrow \{0,1\}^{512} \text{ for randomized signing})$

while $(z,h) = \perp$ do

S1 | Generating a masking vector y

S2 | Computing a first vector of polynomials **w = Ay**

S3 | Determining a second vector of polynomials $\mathbf{w_1}$

S4 | Generating a challenge $c$

S5 | Generating a first test vector **z** and second test vector **r0**

S6 | Modifying said second test vector

S7 | Performing first rejection tests

z and r0 fulfill conditions ? — No

Yes

S8 | Generating a fourth vector of polynomials h

S9 | Performing second rejection tests

Norm of ct0 and h fulfill conditions ? — No

Yes

S10 | Generating signature

[Fig. 5b]

S7    Performing first rejection tests

S71 Generating a temporary test vector

S72 Performing a boundary check on each of the coefficients of the temporary test vector

S73 When each of the coefficients of the temporary test vector passes said boundary check, setting said second test vector to the value of said temporary test vector

[Fig. 6]

**Algorithm 26** ExpandA($\rho$)

*Samples a $k \times \ell$ matrix $\hat{\mathbf{A}}$ of elements of $T_q$.*

**Input:** $\rho \in \{0,1\}^{256}$.
**Output:** Matrix $\hat{\mathbf{A}}$.

1: **for** $r$ from 0 to $k-1$ **do**
2:    **for** $s$ from 0 to $\ell-1$ **do**
3:       $\hat{\mathbf{A}}[r,s] \leftarrow \mathsf{RejNTTPoly}(\rho\|\mathsf{IntegerToBits}(s,8)\|\mathsf{IntegerToBits}(r,8))$
4:    **end for**
5: **end for**
6: **return** $\hat{\mathbf{A}}$

[Fig. 7]

---

**Algorithm 28** ExpandMask$(\rho, \mu)$

---

*Samples a vector* $\mathbf{s} \in R_q^\ell$ *such that each polynomial* $\mathbf{s}_j$ *has coefficients between* $-\gamma_1 + 1$ *and* $\gamma_1$.

**Input:** A bit string $\rho \in \{0,1\}^{512}$ and a nonnegative integer $\mu$.
**Output:** Vector $\mathbf{s} \in R_q^\ell$.

1: $c \leftarrow 1 + \mathrm{bitlen}\,(\gamma_1 - 1)$         $\triangleright$ $\gamma_1$ is always a power of 2
2: **for** $r$ from 0 to $\ell - 1$ **do**
3:      $n \leftarrow \mathrm{IntegerToBits}(\mu + r, 16)$
4:      $v \leftarrow (\mathrm{H}(\rho\|n)[\![32rc]\!], \mathrm{H}(\rho\|n)[\![32rc+1]\!], \ldots, \mathrm{H}(\rho\|n)[\![32rc+32c-1]\!])$
5:      $\mathbf{s}[r] \leftarrow \mathrm{BitUnpack}(v, \gamma_1 - 1, \gamma_1)$
6: **end for**
7: **return** $\mathbf{s}$

---

EP 4 668 665 A1

**Algorithm 31** HighBits($r$)

*Returns $r_1$ from the output of Decompose ($r$)*

**Input:** $r \in \mathbb{Z}_q$
**Output:** Integer $r_1$.

1: $(r_1, r_0) \leftarrow$ Decompose($r$)
2: **return** $r_1$

---

**Algorithm 32** LowBits($r$)

*Returns $r_0$ from the output of Decompose ($r$)*

**Input:** $r \in \mathbb{Z}_q$
**Output:** Integer $r_0$.

1: $(r_1, r_0) \leftarrow$ Decompose($r$)
2: **return** $r_0$

---

**Algorithm 23** SampleInBall($\rho$)

*Samples a polynomial $c \in R_q$ with coefficients from $\{-1, 0, 1\}$ and Hamming weight $\tau$.*

**Input:** A seed $\rho \in \{0,1\}^{256}$
**Output:** A polynomial $c$ in $R_q$.

1: $c \leftarrow 0$
2: $k \leftarrow 8$
3: **for** $i$ from $256 - \tau$ to $255$ **do**
4:     **while** $H(\rho)[\![k]\!] > i$ **do**
5:         $k \leftarrow k + 1$
6:     **end while**
7:     $j \leftarrow H(\rho)[\![k]\!]$          $\triangleright$ $j$ is a pseudorandom byte that is $\leq i$
8:     $c_i \leftarrow c_j$
9:     $c_j \leftarrow (-1)^{H(\rho)[i+\tau-256]}$
10:     $k \leftarrow k + 1$
11: **end for**
12: **return** $c$

---

**Algorithm 33** MakeHint($z, r$)

*Compute hint bit indicating whether adding $z$ to $r$ alters the high bits of $r$.*

**Input:** $z, r \in \mathbb{Z}_q$
**Output:** Boolean

1: $r_1 \leftarrow$ HighBits($r$)
2: $v_1 \leftarrow$ HighBits($r + z$)
3: **return** $[\![r_1 \neq v_1]\!]$

---

**Algorithm 34** UseHint($h, r$)

*Returns the high bits of $r$ adjusted according to hint $h$*

**Input:** boolean $h$, $r \in \mathbb{Z}_q$
**Output:** $r_1 \in \mathbb{Z}$ with $0 \leq r_1 \leq \frac{q-1}{2\gamma_2}$

1: $m \leftarrow (q-1)/(2\gamma_2)$
2: $(r_1, r_0) \leftarrow$ Decompose($r$)
3: **if** $h = 1$ and $r_0 > 0$ **return** $(r_1 + 1)$ mod $m$
4: **if** $h = 1$ and $r_0 \leq 0$ **return** $(r_1 - 1)$ mod $m$
5: **return** $r_1$

---

**Algorithm 30** Decompose($r$)

*Decomposes $r$ into $(r_1, r_0)$ such that $r \equiv r_1(2\gamma_2) + r_0$ mod $q$.*

**Input:** $r \in \mathbb{Z}_q$
**Output:** Integers $(r_1, r_0)$.

1: $r^+ \leftarrow r$ mod $q$
2: $r_0 \leftarrow r^+$ mod$^{\pm}(2\gamma_2)$
3: **if** $r^+ - r_0 = q - 1$ **then**
4:     $r_1 \leftarrow 0$
5:     $r_0 \leftarrow r_0 - 1$
6: **else** $r_1 \leftarrow (r^+ - r_0)/(2\gamma_2)$
7: **end if**
8: **return** $(r_1, r_0)$

[Fig. 8]

17

[Fig. 9]

Power2Round$_q(r, d)$

08 $r := r \bmod^+ q$
09 $r_0 := r \bmod^\pm 2^d$
10 **return** $\left((r - r_0)/2^d, r_0\right)$

MakeHint$_q(z, r, \alpha)$

11 $r_1 := \mathsf{HighBits}_q(r, \alpha)$
12 $v_1 := \mathsf{HighBits}_q(r + z, \alpha)$
13 **return** $[\![ r_1 \neq v_1 ]\!]$

UseHint$_q(h, r, \alpha)$

14 $m := (q - 1)/\alpha$
15 $(r_1, r_0) := \mathsf{Decompose}_q(r, \alpha)$
16 **if** $h = 1$ and $r_0 > 0$ **return** $(r_1 + 1) \bmod^+ m$
17 **if** $h = 1$ and $r_0 \leq 0$ **return** $(r_1 - 1) \bmod^+ m$
18 **return** $r_1$

SampleInBall$(\rho)$

01 Initialize $\mathbf{c} = c_0 c_1 \ldots c_{255} = 00 \ldots 0$
02 **for** $i := 256 - \tau$ to 255
03 $\quad j \leftarrow \{0, 1, \ldots, i\}$
04 $\quad s \leftarrow \{0, 1\}$
05 $\quad c_i := c_j$
06 $\quad c_j := (-1)^s$
07 **return** $\mathbf{c}$

Decompose$_q(r, \alpha)$

19 $r := r \bmod^+ q$
20 $r_0 := r \bmod^\pm \alpha$
21 **if** $r - r_0 = q - 1$
22 $\quad$ **then** $r_1 := 0; r_0 := r_0 - 1$
23 **else** $r_1 := (r - r_0)/\alpha$
24 **return** $(r_1, r_0)$

HighBits$_q(r, \alpha)$

25 $(r_1, r_0) := \mathsf{Decompose}_q(r, \alpha)$
26 **return** $r_1$

LowBits$_q(r, \alpha)$

27 $(r_1, r_0) := \mathsf{Decompose}_q(r, \alpha)$
28 **return** $r_0$

Europäisches
Patentamt

European
Patent Office

Office européen
des brevets

# EUROPEAN SEARCH REPORT

**Application Number**

EP 24 30 5976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Bai Shi ET AL: "CRYSTALS-Dilithium Algorithm Specifications and Supporting Documentation (Version 3.1)", , 8 February 2021 (2021-02-08), pages 1-38, XP093020615, Retrieved from the Internet: URL:https://pq-crystals.org/dilithium/data/dilithium-specification-round3-20210208.pdf [retrieved on 2023-02-03] * figure 4 * ----- | 1-5 | INV. H04L9/00 H04L9/30 |
| A | GUPTA NAINA ET AL: "CRYSTALS-Dilithium on RISC-V Processor: Lightweight Secure Boot Using Post-Quantum Digital Signature", 2023 IEEE/ACM INTERNATIONAL CONFERENCE ON COMPUTER AIDED DESIGN (ICCAD), IEEE, 28 October 2023 (2023-10-28), pages 1-7, XP034479765, DOI: 10.1109/ICCAD57390.2023.10323688 [retrieved on 2023-11-30] * section VI * ----- -/-- | 1-5 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| Munich | 27 November 2024 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 5976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRASANNA RAVI ET AL: "Exploiting Determinism in Lattice-based Signatures - Practical Fault Attacks on pqm4 Implementations of NIST candidates", IACR, INTERNATIONAL ASSOCIATION FOR CRYPTOLOGIC RESEARCH , vol. 20190702:143146 2 July 2019 (2019-07-02), pages 1-14, XP061032955, Retrieved from the Internet: URL:http://eprint.iacr.org/2019/769.pdf [retrieved on 2019-07-02] * section 7 * * abstract * ----- | 1-5 | |
| A | ISLAM SAAD ET AL: "Signature Correction Attack on Dilithium Signature Scheme", 2022 IEEE 7TH EUROPEAN SYMPOSIUM ON SECURITY AND PRIVACY (EUROS&P), IEEE, 6 June 2022 (2022-06-06), pages 647-663, XP034138955, DOI: 10.1109/EUROSP53844.2022.00046 [retrieved on 2022-06-23] * section 7.2 * ----- | 1-5 | TECHNICAL FIELDS SEARCHED (IPC) |

The present search report has been drawn up for all claims

| Place of search | Date of completion of the search | Examiner |
|---|---|---|
| Munich | 27 November 2024 | Billet, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- National Institute of Standards and Technology (2023) Module-Lattice-Based Digital Signature Standard. Federal Information Processing Standards Publication (FIPS) NIST FIPS 204 ipd. Department of Commerce
- **S. BAI** ; **L. DUCAS** ; **E. KILTZ** ; **T. LEPOINT** ; **V. LYUBASHEVSKY** ; **P. SCHWABE** ; **G. SEILER** ; **D. STEHLÉ**. *CRYSTALS-Dilithium Algorithm specifications and supporting documentation (Version 3.1)*, February 2021
- Experimental analysis of the laser-induced instruction skip fault model. **JEAN-MAX DUTERTRE** ; **TIMOTHÉ RIOM** ; **OLIVIER POTIN** ; **JEAN-BAPTISTE RIGAUD**. The 24th Nordic Conference on Secure IT Systems. Nordsec, November 2019, vol. 2019, 221-237

- **JEAN-MAX DUTERTRE** ; **ALEXANDRE MENU** ; **OLIVIER POTIN** ; **JEAN-BAPTISTE RIGAUD** ; **JEAN-LUC DANGER**. Experimental analysis of the electromagnetic instruction skip fault model and consequences for software countermeasures. *Microelectronics Reliability*, 2021, vol. 121, ISSN 0026-2714, 114133
- Traitor: A low-cost evaluation platform for multifault injection. **LUDOVIC CLAUDEPIERRE** ; **PIERRE-YVES PÉNEAU** ; **DAMIEN HARDY** ; **ERVEN ROHOU**. Proceedings of the 2021 International Symposium on Advanced Security on Software and Systems (ASSS '21). Association for Computing Machinery, 2021, 51-56